(19) Europäisches Patentamt
European Patent Office
Office européen des brevets

(11) **EP 2 814 893 B1**

(12) # EUROPEAN PATENT SPECIFICATION

(45) Date of publication and mention
of the grant of the patent:
**09.01.2019 Bulletin 2019/02**

(51) Int Cl.:
***C09J 127/24*** *(2006.01)*

(21) Application number: **13710594.6**

(86) International application number:
**PCT/NL2013/050081**

(22) Date of filing: **12.02.2013**

(87) International publication number:
**WO 2013/122458 (22.08.2013 Gazette 2013/34)**

(54) **PVC-BASED ADHESIVE SUITABLE FOR BONDING PVC PIPES AND USE OF SAID ADHESIVE**

PVC-BASIERTER HAFTSTOFF ZUM VERBINDEN VON PVC-ROHREN UND VERWENDUNG
DIESES HAFTSTOFFES

ADHÉSIF À BASE DE PVC APPROPRIÉ POUR L'ASSEMBLAGE DE TUYAUX EN PVC ET
UTILISATION DUDIT ADHÉSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2012 NL 2008299**

(43) Date of publication of application:
**24.12.2014 Bulletin 2014/52**

(73) Proprietor: **Bison International B.v.
4462 EW Goes (NL)**

(72) Inventors:
• **BIERENS, Johannes Petrus Maria
NL-4421 ML Kapelle (NL)**
• **KLERKS, Johannes Patricius Maria
NL-4443 AA Nisse (NL)**

(74) Representative: **van Kooij, Adriaan
Arnold & Siedsma
Bezuidenhoutseweg 57
2594 AC The Hague (NL)**

(56) References cited:
**DE-A1- 1 646 591     US-A- 4 910 244
US-A1- 2010 006 220**

**Description**

The present invention relates to a PVC-based adhesive for bonding of pipes made of PVC. Further, the present invention relates to the use of said adhesive.

Polyvinyl chloride, often abbreviated PVC, is a thermoplastic material which is widely used in the building industry because of its relative hardness and strength. In particular, PVC is used to make pipes, e.g. in industrial pressure systems, sewage or protecting electrical wiring, as well as for drinking water systems. Such pipes are often based on, or made from, specific types of PVC: uPVC and CPVC.

The designation uPVC is the abbreviation of "unplasticized PVC", i.e. a PVC in which no plasticizers have been added, uPVC is designated as a hard plastic. uPVC resists to temperatures to about 60 °C.

CPVC designates a PVC that is further chlorinated (Chlorinated PolyVinyl Chloride), i.e. a PVC which is obtained by chlorination of uPVC. CPVC has an increased hardness due to the chlorination as well as an increased temperature resistance (up to about 95 °C). CPVC can be used for cold and hot water pipes.

The difference between uPVC and CPVC can be expressed in terms of the percentage by mass of chlorine (or chloride atoms), which is present in both types of PVC. Usually, uPVC contains about 57 wt.% of chlorine, and therefore, the chlorine percentage of CPVC is above this value. The exact value for CPVC is dependent on the degree of chlorination which has been applied. Different types of CPVC are available on the market such as "TempRite ® 674x571", "Lucalor RB8065 ®" and "Kaneka CPVC H827".

For bonding PVC pipes, an adhesive containing PVC is often chosen, so that the resulting bond (or joint) exhibits the same properties as the pipe itself. Preferably, the bonding of a specific type of PVC pipe is carried out with an adhesive which contains the same type of PVC. In the context of the present invention, the term "PVC-based adhesive" is to be understood as PVC being the main component of the adhesive which acts as a binder. In the art it may be referred to as "PVC adhesive". In the context of the present invention the term "adhesive" is to be understood as a material, in liquid or substantially liquid form (i.e. which presents a certain viscosity or may be thixotropic), that adheres or bonds items together. Adhesives cure (harden) and the bond (joint) between two items is formed.

Adhesives may be useful for providing a durable and tight joint.

A PVC-based adhesive is a solution of polymers of PVC in a suitable solvent. The solvent most commonly used up to now, because of its ability of dissolving PVC, is tetrahydrofuran (THF). When bonding a PVC pipe, the PVC-based adhesive is applied on the surfaces to be bonded and the solvent is pushed to some extent at the top layer of the surface, so that a part of the PVC molecules in the top layer are surrounded by the solvent. Depending on time and temperature, the adhesive dries by evaporation of the solvent in air. After drying, a joint formed by the adhesive is obtained, which runs smoothly from the bonded surfaces. In this context it can be referred to as a fusion, or solvent welding, of the two surfaces by means of an adhesive wear.

The use of THF as a solvent for a PVC adhesive is, however, difficult, because of the health hazard related to THF. Further, there are also indications that eventual new European regulations may come into force, for indicating on packaging that THF is a suspected carcinogen.

US 2010/006220 discloses a solvent cement for bonding plastics comprising (a) a corresponding polymer (i.e., a polymer which corresponds to the thermoplastic to be joined) selected from PVC, CPVC and ABS, (b) at least one polar organic solvent, (c) an optional sulfur containing solvent, (d) an optional co-solvent capable of at least partially dissolving or at least swelling the corresponding polymer, (e) an optional additional polymer selected from an acrylic polymer, a vinyl aromatic polymer, a vinyl pyrrolidone polymer, and mixtures thereof, and (f) at least one oxygen and/or nitrogen-containing macrocyclic compound.

In view of the above drawbacks associated with the use of THF as a solvent for adhesives, there is a general need for providing a THF-free PVC-adhesive, which causes thus less health or environmental hazard. Such an adhesive should have good, or at least similar adhesive properties as the well-known PVC adhesives which are not THF-free, with respect to workability and drying, as well as in terms of strength and temperature resistance of the obtained adhesive bond.

Therefore, it is a goal of the present invention, amongst other goals, to provide such a THF-free adhesive exhibiting similar (comparable), or better properties than the well-known PVC adhesives which are not THF-free.

The above-mentioned object is achieved by the PVC-based adhesive according to the present invention. The present invention relates to a PVC-based adhesive for bonding PVC pipes, comprising:

CPVC with a chlorine-percentage of at least 60 wt.%, wherein the CPVC is obtainable by chlorination of a uPVC having a K-value of at most 55, and

a solvent comprising 1,3-dioxolane and/or derivatives thereof wherein the content of 1,3-dioxolane and/or derivatives is at least 30 wt.% relative to the total weight of the PVC-based adhesive

In the PVC-based adhesive according to the present invention, the CPVC is present in dissolved form in the solvent.

The solvent is 1,3 dioxalane and/ or derivatives thereof. Also disclosed are solvents comprising one or more aliphatic compounds having a hydrocarbon ring and having at least two ether groups (-O-) in the ring structure. The expression "one or more aliphatic compounds having a hydrocarbon ring and having at least two ether groups (-O-) in the ring structure" can also be designated as "one or more aliphatic heterocycles comprising at least two oxygen atoms". The solvent can accordingly be an aliphatic heterocycle comprising two or more, three or more, four or more, five or more, six or more ether groups (i.e. -O-). The amount of carbon atoms present in the aliphatic hydrocarbon ring is in the range 3 to 20, advantageously 3 to 10, more advantageously 3 to 6, most advantageously 3 or 4.

Also disclosed are crown ether solvents, such as for example 12-crown-4 (1,4,7,10-tetraoxacyclododecane), 15-crown-5 (1,4,7,10,13-Pentaoxacyclopentadecane), 18-crown-6 (1,4,7,10,13,16-hexaoxacyclooctadecane), Dicyclohexano-18-crown-6 ($C_{20}H_{36}O_6$), dibenzo-18-crown-6 ($C_{20}H_{24}O_6$).

Surprisingly, CPVC can be dissolved in 1,3-dioxolane and/or derivatives thereof provided that the CPVC satisfies the two specified characteristics: a chlorine percentage of at least 60 wt %, or above and that the CPVC is obtained on the basis of uPVC which has a K-value of at most 55. This is surprising because the solubility of PVC in 1,3-dioxolane and/or derivatives thereof is much lower, in comparison with THF. This is also evident from the fact that uPVC cannot be dissolved in 1,3-dioxolane.

The main advantage of 1,3-dioxolane is that it is far less toxic than THF and therefore presents less health and environmental hazard. In addition, 1,3-dioxolane has a relatively mild odor, which is less pungent, or less unpleasant, for the user, in comparison with THF.

Further, the PVC-based adhesive according to the invention is easy to process, and in that respect is similar to well-known PVC and CPVC-adhesives. Furthermore, with regard to drying properties and shelf-life, the properties of the adhesive according to the present invention are similar, comparable, or better to the known PVC and CPVC adhesives.

Accordingly, the present invention provides a PVC-based adhesive which presents the following advantages:

- The adhesive is easy to apply and in that respect is similar to the known PVC-based adhesives;
- The drying of the adhesive is good and similar to the known PVC-based adhesives;
- The adhesive comprises no solvents that may separate during the drying process. Accordingly, the drying is homogenous;
- The adhesive has a relatively mild odor, which is more pleasant than a pungent PVC-based adhesive comprising THF as solvent;
- The adhesive has a shelf-life which is comparable to the known PVC-based adhesives.

In the context of the present invention, the PVC-based adhesive is suitable for bonding PVC pipes. The PVC pipes to be bonded according to the present invention can be made of CPVC, or uPVC.

In the context of the present invention, the K-value of a polymer is a parameter by which the degree of polymerization is expressed. In the context of the invention, CPVC is defined by the K value of the uPVC from which the CPVC is formed. This definition is common in the art, and is often used by manufacturers/suppliers of CPVC.

The K-value of a polymer gives an indication of "the inherent viscosity of a polymer" (via the equation: inherent viscosity = K-value · molecular weight of the polymer, according to the Mark-Houwink equation). Accordingly, it is often referred as "inherent viscosity" when referring to K-values. K-values can also be designated as (IV)-values.

The K-value is calculated on the basis of viscosity measurements via the formula:

$$N_{inh} = \frac{\log\left(\frac{N_S}{N_0}\right)}{c} = \frac{75\,K^2}{1 + 1{,}5Kc} + K$$

wherein:

$N_{inh}$ = inherent viscosity
$N_S$ = viscosity of the solution
$N_0$ = viscosity of the solvent
$C$ = concentration in gram/ml

The K value can be measured, for example according to the standard ISO 1628-2.

Advantageously, the CPVC in the PVC-based adhesive according to the invention, has a chlorine content of at least 60 wt.%. In other words, the chlorine content in the CPVC is 60 wt.%, or above. More advantageously, the chlorine content is at least 65 wt. %. Preferably, the chlorine content is in the range from 60 wt. % to 70 wt. %, such as from 65 wt. % to 70 wt. %.

A PVC-based adhesive with such a chlorine percentage of CPVC enhances the previously mentioned advantages, in particular with regard to the solubility of CPVC into the solvent comprising one or more aliphatic hydrocarbon ring compounds, each having at least two ether groups in the ring structure, such as 1,3-dioxolane and/or derivatives thereof.

Additionally, with such an increased content of chlorine, the obtained adhesive joint shows an increased mechanical strength and an increased temperature resistance.

Advantageously, the CPVC in the PVC-based adhesive according to the present invention is prepared on the basis of an uPVC having a K-value of at most 55. In other words, said K-value can take any value of 55 or below, such as at most 55, at most 54, at most 53, at most 52, at most 51, at most 50, at most 49, at most 48, at most 47, at most 46, at most 45. Preferably, the K-value of the uPVC on the basis of which CPVC is prepared has a K-value in the range from 30 to 55, more preferably from 40 to 55, most preferably from 45 to 55.

A PVC-based adhesive comprising a CPVC obtained from a uPVC with such a K-value as starting material, enhances the above-mentioned advantages, such as an increased solubility into 1,3-dioxolane and/or derivatives thereof.

According to a preferred embodiment of the PVC-based adhesive according to the invention, the solvent may comprise a second component. The second component can be a ketone, an ester, an alcohol, an aldehyde or an ether according to the above definition, which are chosen from the group of ketones, esters, alcohols, aldehydes and ethers comprising 3 to 12 carbon atoms, preferably 3 to 8 carbon atoms, more preferably 3 to 6 carbon atoms. The second component can be a linear or aliphatic hydrocarbon comprising a functional group as defined above and can be substituted or unsubstituted, for example with an alkyl group comprising 1 to 6 carbon atoms, or a cycloalkyl, or an aryl. Accordingly, the substitution can be for example a methyl, an ethyl, a propyl, a butyl, a pentyl, a hexyl, a cyclohexyl, a phenyl. The ketone can be acetone, methyl ethyl ketone, cyclohexanone. The ester can be an acetate ($CH_3COO$-). The acetate can be chosen from the group methyl acetate, ethyl acetate, propyl acetate, and butyl acetate. The alcohol can be methanol, ethanol, 1-propanol, isopropanol, 1-butanol, tert-butanol, cyclohexanol. The ether can be dimethylether, methyl ethyl ether, diethylether, dipropylether, dibutylether, dipentylether, dihexylether.

When the solvent present in the PVC-based adhesive according to the present invention comprises a second component, the adhesive achieves the previously mentioned advantages, by increasing the solubility of the PVC material to bond into 1,3-dioxolane and/or derivatives thereof. Accordingly, the required amount can be reduced. This provides the advantage that it reduces the total cost of the adhesive, since 1,3-dioxolane can be relatively expensive compared to said second component. Additionally, in the presence of the second component, the open time and curing speed of the adhesive can be favorably influenced. The second component can also be chosen in such a way to increase the curing speed, or increase open time.

According to an embodiment of the PVC-based adhesive according to the present invention, the adhesive may comprise one or more additives. The additives can be such as:

- a thickener;
- a stabilizer.

Such additives are commonly used in the art: with the thickening agent, the desired viscosity of the adhesive can be set. By using of a stabilizer, the temperature resistance of the adhesive bond is increased, which ensures the stability of the adhesive in the package, as well as after curing.

In the context of the present invention, the thickening agent can be silica and/or bentonite. In the context of the present invention, the stabilizer can be a tin-containing compound.

In the context of the present invention, the PVC-based adhesive can have a content of CPVC of at least 5 wt.%, preferably at least 8 wt.% of the total weight of the adhesive. In other words, the PVC-based adhesive has a content of CPVC of 5 wt.% or above, preferably 8 wt.% or above, of the total weight of the adhesive.

Advantageously, the PVC-based adhesive according to the invention can be a CPVC content which is at most 25 wt. %, preferably at most 20 wt. %, more preferably at most 17 wt. %. Accordingly, the CPVC content is equal to or below 25 wt.%, equal to or below 20 wt.%, equal to or below 17 wt.%. In the context of the present invention, the CPVC content can advantageously have any value between 5 wt% and 25 wt.%, of the total weight of the adhesive, such as 5 wt.%, 6 wt%, 7 wt.%, 8 wt. %, 9 wt.%, 10 wt. %, 11 wt. %, 12 wt. %, 13 wt. %, 14 wt. %, 15 wt.%, 16 wt%, 17 wt.%, 18 wt. %, 19 wt.%, 20 wt. %, 21 wt. %, 22 wt. %, 23 wt. %, 24 wt. %, 25 wt.% of the total weight of the adhesive according to the present invention.

The PVC-based adhesive according to the present invention is sufficient binding in order to be effective as an adhesive in the context of the present invention. Particularly, the adhesive according to the present invention presents good binding, or bonding, properties, for example with respect to the processability of the adhesive, and the quality (mechanical strength, smoothness, heat resistance) of the obtained joint (bonding).

Preferably, the PVC-based adhesive according to the present invention has a viscous (or thixotropic) character.

The adhesive must be sufficiently thin to be applied, but sufficiently thick when applied to an intermediate space 0.6 mm to be able to fill it in. Accordingly, the resulting adhesive bond fulfills the usual requirements for strength and pressure resistance.

Measurements with a rotational viscometer Haake E30 provided with a measuring body, and at a rotational speed of 181 min$^{-1}$ and 5.6 min$^{-1}$, were carried out with the PVC-based adhesive according to the present invention. The following values were obtained:

- At 181 min$^{-1}$: 2500 to 3000 mPa·s
- At 5.6 min$^{-1}$: between 25,000 and 40,000 mPa·s

These materials are highly viscous and show little flow, or substantially no flow.

Depending on the application, the adhesive according to the present invention can be a low viscosity adhesive, for example, having a viscosity of 500 mPa·s at 181 min-1.

With further advantage, the PVC-based adhesive according to the invention has a total content of solvent comprising 1,3-dioxolane and/or derivatives thereof which is at least 30 wt.%, more preferably at least 40 wt.%, and most preferably at least 45 wt. % of the total weight of the PVC-based adhesive. Accordingly, solvent comprising 1,3-dioxolane and/or derivatives thereof, is present in the PVC-based adhesive in an amount of 30 wt. % or above, more preferably 40 wt. % or above, most preferably 45 wt. % or above relative to the total weight of the PVC-based adhesive.

Accordingly, the solvent contains a sufficient amount of 1,3-dioxolane, in order to be effective in the context of the invention, particularly with respect to the solubility of CPVC. The total content of 1,3-dioxolane and/or derivatives thereof, may be between 30 wt.% and 60 wt.% of the total weight of the PVC-based adhesive according to the present invention. A second component of the solvent comprising 1,3-dioxolane may be present in the adhesive. Such as second component can be an hydrocarbon comprising a functional group chosen from the group ketone, ester, alcohol, aldehyde, ether comprising between 3 to 12 carbon atoms, advantageously between 3 and 6 carbon atoms as defined hereabove. The second component can be for example, cyclohexanone, methyl ethyl ketone, propylacetate.

In the context of the PVC-based adhesive according to the invention, the content of the second component of the solvent is at least 5 wt%, advantageously at least 10 wt%, more advantageously at least 15 wt. % of the total weight of the solvent. The content of the second component of the solvent can be at most 65 wt. %, advantageously at most 55 wt. % of the total weight of the solvent. Advantageously, the PVC-based adhesive according to the invention, the content of the second component of the solvent is in the range from 5 wt. % to 65 wt. %, more advantageously from 15 wt.% to 55 wt.%, most advantageously 25 wt. % to 45 wt. %, preferably about 35 wt.%. of the total weight of the solvent.

According to the present invention, the solvent can further comprise a second component, which consists of: one or more aliphatic compounds having a hydrocarbon ring and one ether group in the ring structure and at least one substitution (on the hydrocarbon ring) chosen from an alkyl, an alcohol, and a linear ether. Advantageously, the hydrocarbon ring having one single ether function comprises at least four carbon atoms, more advantageously 5 carbon atoms.

The content of such second component of the solvent, when present in the adhesive according to the present invention, present dissolves CPVC particularly well.

Advantageously, a third and optionally fourth component in the solvent can be included. The third and fourth components are chosen from the group ketone, ester, alcohol, aldehyde, ether such as defined above for the second component. The third and fourth components are different from each other and different from the second component.

In the context of the present invention, the second, third and fourth components are preferably not THF.

According to the PVC-based adhesive according to the present invention, the content of the third and/or fourth component, if present in the adhesive, of the solvent is at least 1 wt%, advantageously at least 2 wt%, more advantageously at least 5 wt. % of the total weight of the solvent. The content of the third and/or fourth component of the solvent can be at most 35 wt. %, advantageously at most 25 wt. % of the total weight of the solvent. Advantageously, the PVC-based adhesive according to the invention, the content of the second component of the solvent is in the range from 1 wt. % to 35 wt. %, more advantageously from 2 wt.% to 25 wt.%, most advantageously 5 wt. % to 25 wt. % of the total weight of the solvent.

In the context of the present invention, the second, third and fourth component may be a hydrocarbon ring comprising one single ether function, if the hydrocarbon ring is substituted by at least one group chosen from:

- an alkyl, such as a $C_1$-$C_6$ alkyl, for example methyl, ethyl, propyl, butyl, pentyl, hexyl, or any alkyl, or aryl substituted alkyl;
- an alcohol, such as a -OH group, or an alkyl-OH, for example $-CH_2-OH$, $-CH_2-CH_2-OH$, $-CH_2CH(-CH_3)-OH$, $-CH_2CH_2CH_2-OH$;
- a linear ether, such as a methoxy group ($-O-CH_3$), an ethoxy group ($-O-CH_2-CH_3$), an n-propoxy group ($-O-CH_2-CH_2-CH_3$), an isopropoxy group ($-O-CH(-CH_3)-CH_3$), a n-butoxy group ($-O-CH_2-CH_2-CH_2-CH_3$), a sec-butoxy group ($-O-CH(-CH_3)CH_2-CH_3$), a tert-butoxy group ($-O-C(-CH_3)_3$).

Accordingly, the second, third and fourth component in the context of the present invention can be for example methyl-THF. A substituted THF, such as methyl-THF according to the definition above, is a less toxic and more environmentally-friendly compound than the unsubstituted THF which the present invention has for goal to avoid. Methyl-THF is to be understood as 2-methyl-THF in the context of the present invention. 2-methyltetrahydrofuran is an organic compound with the molecular formula $CH_3C_4H_7O$, wherein the methyl group is located on the carbon next to the heteroatom (O atom) in the case of 2-methyltetrahydrofuran.

In the context of the present invention the general expression "at least one" is to be understood as one or more, two or more, three or more, four or more. In the context of the present invention, the general expression "one or more" is to be understood as one, two, three, four, five, or six.

Advantageously, the PVC-based adhesive according to the invention comprises a copolymer of vinyl chloride and vinyl acetate (PVC/Ac), which copolymer is present in dissolved form in the solvent. The copolymer of PVC/Ac may be present in combination with CPVC, in the adhesive according to the present invention.

A PVC-based adhesive made on the basis of a combination of CPVC and PVC/Ac provides an adhesive connection (joint) that shows a good temperature resistance, i.e. a joint which resistant to a temperature of at least 60 ° C. This result cannot be achieved for the copolymer PVC/Ac itself. Further, the above combination of PVC/Ac is sufficiently soluble in 1,3-dioxolane to produce a PVC-based adhesive suitable for bonding PVC pipes.

In the adhesive according to the present invention, the CPVC can also be mixed to acrylic polymers. Accordingly, the CPVC can be a polymer of CPVC comprising acrylic polymers. With polymers of CPVC comprising acrylic polymers, the PVC-based adhesive showing similar (comparable) results can be obtained, than when the adhesive comprises PVC/Ac.

A further aspect of the invention relates to the use of a PVC-based adhesive according to the first aspect of the invention, for the bonding of pipes of PVC according to the Dutch standard NEN-EN 14814:2007, wherein the obtained adhesive presents a shear strength and a pressure resistance that meets the requirements set out in this standard.

The above standard was published by the Dutch Standardization Institute in 2007. For the detailed content of the standard is referred to this publication.

The invention will be further illustrated with the following Examples.

**Examples**

**Example 1: sample preparation**

Four samples of the PVC-based adhesive according to the invention were prepared by mixing the components as recited in table 1.

Table 1.

| | Sample 1 | Sample 2 | Sample 3 | Sample 4 |
|---|---|---|---|---|
| Component | Content (wt.%) | Content (wt.%) | Content (wt.%) | Content (wt.%) |
| 1,3-dioxolane | 59 | 45 | 30 | 10 |
| Methyl ethyl ketone (MEK) | 5 | 36,5 | 36,5 | 45,5 |
| Propylacetate | - | - | - | 5 |
| Cyclohexanone | 16,5 | - | 15 | 20 |
| thickener | 2 | 3 | 2 | 3 |
| Tin-stabilizer | < 0,5 | < 0,5 | < 0,5 | < 0,5 |
| CPVC | 17 | 15 | 8 | 10 |
| PVC/Ac Copolymer | - | - | 8 | 6 |
| Diverse additives | < 0,5 | < 0,5 | < 0,5 | < 0,5 |

In Example 1, the chlorine percentage of the used CPVC is the range of 65% to 70% and the used CPVC is prepared on the basis of a uPVC with a K-value in the range from 45 to 55. The K value was measured according to the standard ISO 1628-2.

The mixture was prepared as follows:

- The solvent comprising 1,3-dioxolane, propyl acetate, cyclohexanone, and methyl ethyl ketone was placed in a mixing vessel;
- the thickener and stabilizer were introduced;
- the mixture was stirred;
- CPVC resin were added gradually;
- other additives were added;
- optional amounts of solvent can be added, such as a fraction of 1,3-dioxolane and MEK, provided that the initial amount used was not sufficient for the intended ratio;
- allowing the CPVC to dissolve completely until a stable and homogeneous PVC-based adhesive was obtained.

**Example 2: Strength and pressure measurements**

With the formulation of sample 2 of the PVC-based adhesive according to Example 1, a PVC tube (pipe) and a PVC fitting (socket) were bonded together (glued). The fitting and the tube were both made of CPVC. A second measurement was made with a fitting and a tube both made of uPVC. The relative space (diametric clearance) between the inside diameter of the socket and outer diameter of the tube was about 0.6 mm. The following shear strengths were measured according to standard NEN-EN 14814:2007, for the fitting and pipe bonded with the PVC-based adhesive according to the present invention. The results are presented in table 2:

Table 2.

| Material fitting + pipe | Drying time (hrs) | Shear strength (MPa) Norm cf. 14814 | Shear strength (MPa) measured |
|---|---|---|---|
| CPVC | 1 | 0,4 | 1 |
| | 24 | 1,5 | 4 |
| | 480+96* | 10,0 | 12 |
| UPVC | 1 | 0,4 | 1,5 |
| | 24 | 1,5 | 6 |
| | 480+96** | 7,0 | 12 |
| * 480hrs at 23°C; 96hrs at 80°C | | | |
| ** 480hrs at 23°C; 96hrs at 60°C | | | |

The pressure resistance was measured in accordance with Standard NEN-EN 14814:2007 for a bonded fitting and pipe after a drying time of 480 hours + 96 hours and a conditioning period longer than one hour. The results are presented in table 3.

Table 3.

| Material fitting+pipe | Nominal pressure* (MPa) | Temperature (°C) | Resistance to pressure (hrs without leakage) |
|---|---|---|---|
| CPVC | 25 | 80 | > 1000 |
| UPVC | 16 | 20 | > 1000 |
| UPVC | 16 | 40 | > 1000 |
| UPVC | 16 | 60 | > 1000 |
| * In the tables, according to the NEN norm, the test pressure was set as follow: 12,5 bar; 51,2 bar; 20,8 bar; and 16 bar. | | | |

Accordingly, for the above combinations of fitting and pipe bonded with the PVC-based adhesive according to the present invention, the shear strength and pressure resistance meets the requirements of standard EN 14814:2007. Note that the results obtained with samples 1, 3 and 4 according to the present invention are similar to the results shown in tables 2 and 3.

The PVC-based adhesive according to the present invention presents the following qualitative characteristics:

- The adhesive is easy to apply and in that respect is similar to the known PVC-based adhesives;
- The drying process of the adhesive is good and similar to the known PVC-based adhesives;

- The adhesive comprises no solvents that may separate during the drying process, accordingly, the drying is homogenous;
- The adhesive has a relatively mild odor, which is more pleasant than a pungent PVC-based adhesive comprising THF as solvent;
- The adhesive has a shelf-life which is comparable to the known PVC-based adhesives.

According to the present invention, it is a requirement that the chlorine percentage of the CPVC in the adhesive is at least 60 wt. % and the CPVC is obtained by chlorination of uPVC having a K-value of at most 55, in order to obtain the dissolution of the CPVC in the solvent comprising one or more aliphatic compounds having a hydrocarbon ring and at least two ether groups in the ring structure. If said requirement is not fulfilled, an adhesive does not provide the advantages of the adhesive according to the present invention recited above and does not present similar (or comparable), or better properties than a PVC-based adhesive comprising THF.

**Claims**

1. Tetrahydrofuran (THF) free polyvinyl chloride (PVC) based adhesive for bonding PVC pipes, comprising:

   - chlorinated polyvinyl chloride (CPVC) with a chlorine-percentage of at least 60 wt.%, wherein the CPVC is obtainable by chlorination of an unplasticized polyvinyl chloride (uPVC) having a K-value of at most 55;
   - a solvent comprising 1,3-dioxolane and/or derivatives thereof wherein the content of 1,3-dioxolane and/or derivatives is at least 30 wt.% relative to the total weight of the PVC-based adhesive.

2. PVC-based adhesive according to claim 1, wherein the CPVC has a chlorine percentage of at least 65 wt.%.

3. PVC-based adhesive according to claim 1 or 2, wherein the CPVC is prepared on the basis of a PVC(-U) with a K-value in the range from 45 to 55.

4. PVC-based adhesive according to any one of claims 1 to 3, wherein the solvent further comprises a second component, which consists of one or more types of hydrocarbons comprising a functional group selected from the group consisting of linear or cyclic aliphatic ketones, linear or cyclic aliphatic esters, linear or cyclic aliphatic alcohols, linear or cyclic aliphatic aldehydes, linear aliphatic ethers.

5. PVC-based adhesive according to any one of claims 1 to 4, wherein the solvent further comprises a second component, which consists of one or more aliphatic compounds having a hydrocarbon ring and one ether group in the ring structure and at least one substitution chosen from an alkyl, an alcohol, and a linear ether.

6. PVC-based adhesive according to any one of claims 1 to 5, further comprising one or more of the following additives:

   - a thickener;
   - a stabilizer.

7. PVC-based adhesive according to any one of claims 1 to 6, wherein the content of CPVC is at least 5 wt.% of the total weight of the PVC-based adhesive.

8. PVC-based adhesive according to any one claims 4 to 7, wherein the solvent comprises a second component that is between 15 wt.% and 55 wt.% of the total weight of the solvent.

9. PVC-based adhesive according to any one of claims 1 to 8, further comprising a copolymer of vinyl chloride and vinyl acetate (PVC/Ac) present in dissolved form in the solvent.

10. Use of a PVC-based adhesive according to any one of claims 1 to 9, in bonding pipes made of PVC according to the NEN-EN 14814:2007 standard, wherein the obtained adhesive bond meets the requirements set in said standard in terms of shear strength and pressure resistance.

**Patentansprüche**

1. Haftstoff auf Basis von Tetrahydrofuran- (THF-) freiem Polyvinylchlorid (PVC) zum Verbinden von PVC-Rohren, der aufweist:

   - chloriertes Polyvinylchlorid (CPVC) mit einem Chloranteil von wenigstens 60 Gew.-%, wobei das CPVC durch Chlorierung eines weichmacherfreien Polyvinylchlorids (uPVC) mit einem K-Wert von höchstens 55 erhältlich ist;
   - ein Lösungsmittel, das 1,3-Dioxolan und/oder Derivate davon aufweist, wobei der Gehalt von 1,3-Dioxolan und/oder Derivaten davon relativ zu dem Gesamtgewicht des Haftstoffs auf PVC-Basis wenigstens 30 Gew.-% ist.

2. Haftstoff auf PVC-Basis nach Anspruch 1, wobei das CPVC einen Chloranteil von wenigstens 65 Gew.-% hat.

3. Haftstoff auf PVC-Basis nach Anspruch 1 oder 2, wobei das CPVC auf der Basis eines PVC(-U) mit einem K-Wert im Bereich von 45 bis 55 hergestellt ist.

4. Haftstoff auf PVC-Basis nach einem der Ansprüche 1 bis 3, wobei das Lösungsmittel ferner eine zweite Komponente aufweist, die aus einer oder mehr Arten von Kohlenwasserstoffen besteht, die eine Funktionsgruppe aufweisen, die aus der Gruppe ausgewählt ist, die aus linearen oder zyklischen aliphatischen Ketonen, linearen oder zyklischen aliphatischen Estern, linearen oder cyclischen aliphatischen Alkoholen, linear oder cyclischen aliphatischen Aldehyden, linear aliphatischen E thern besteht.

5. Haftstoff auf PVC-Basis nach einem der Ansprüche 1 bis 4, wobei das Lösungsmittel ferner eine zweite Komponente aufweist, die aus einer oder mehr aliphatischen Verbindungen besteht, die einen Kohlewasserstoffring und eine Ethergruppe in der Ringstruktur und wenigstens einen Ersatz, der aus einem Alkyl, einem Alkohol und einem linearen Ether besteht, hat.

6. Haftstoff auf PVC-Basis nach einem der Ansprüche 1 bis 5, der ferner einen oder mehrere der folgenden Zusätze aufweist:

   - einen Verdicker;
   - einen Stabilisator.

7. Haftstoff auf PVC-Basis nach einem der Ansprüche 1 bis 6, wobei der Gehalt von CPVC wenigstens 5 Gew.-% des Gesamtgewichts des Haftstoffs auf PVC-Basis ist.

8. Haftstoff auf PVC-Basis nach einem der Ansprüche 4 bis 7, wobei das Lösungsmittel eine zweite Komponente aufweist, die zwischen 15 Gew.-% und 55 Gew.-% des Gesamtgewichts des Lösungsmittels aufweist.

9. Haftstoff auf PVC-Basis nach einem der Ansprüche 1 bis 8, der ferner ein Copolymer von Vinylchlorid und Vinylacetat (PVC/Ac) aufweist, das in gelöster Form in dem Lösungsmittel vorhanden ist.

10. Verwendung eines Haftstoffs auf PVC-Basis nach einem der Ansprüche 1 bis 9 zum Verbinden von Rohren, die aus PVC gemäß der NEN-EN 14814:2007-Norm hergestellt sind, wobei die erhaltene Haftstoffverbindung die Anforderungen erfüllt, die in dieser Norm im Hinblick auf die Scherfestigkeit und die Druckbeständigkeit festgelegt sind.


**Revendications**

1. Adhésif à base de polychlorure de vinyle (PVC) sans tétrahydrofurane (THF) pour l'assemblage de tuyaux en PVC, comprenant :

   - du polychlorure de vinyle chloré (CPVC) ayant un pourcentage en chlore d'au moins 60 % en poids, dans lequel le CPVC peut être obtenu par chloration d'un polychlorure de vinyle non plastifié (uPVC) ayant une valeur K d'au plus 55 ;
   - un solvant comprenant du 1,3-dioxolane et/ou des dérivés de celui-ci dans lequel la teneur en 1,3-dioxolane et/ou dérivés est d'au moins 30 % en poids par rapport au poids total de l'adhésif à base de PVC.

**2.** Adhésif à base de PVC selon la revendication 1, dans lequel le CPVC a un pourcentage en chlore d'au moins 65 % en poids.

**3.** Adhésif à base de PVC selon la revendication 1 ou 2, dans lequel le CPVC est préparé sur la base d'un PVC(-U) ayant une valeur K dans la plage de 45 à 55.

**4.** Adhésif à base de PVC selon l'une quelconque des revendications 1 à 3, dans lequel le solvant comprend en outre un second composant, qui est constitué d'un ou plusieurs types d'hydrocarbures comprenant un groupe fonctionnel choisi dans le groupe constitué des cétones aliphatiques linéaires ou cycliques, des esters aliphatiques linéaires ou cycliques, des alcools aliphatiques linéaires ou cycliques, des aldéhydes aliphatiques linéaires ou cycliques, des éthers aliphatiques linéaires.

**5.** Adhésif à base de PVC selon l'une quelconque des revendications 1 à 4, dans lequel le solvant comprend en outre un second composant, qui est constitué d'un ou plusieurs composés aliphatiques ayant un anneau hydrocarbure et un groupe éther dans la structure annulaire et au moins une substitution choisie parmi un alkyle, un alcool et un éther linéaire.

**6.** Adhésif à base de PVC selon l'une quelconque des revendications 1 à 5, comprenant en outre un ou plusieurs des additifs suivants :

- un épaississant ;
- un stabilisant.

**7.** Adhésif à base de PVC selon l'une quelconque des revendications 1 à 6, dans lequel la teneur en CPVC est d'au moins 5 % en poids du poids total de l'adhésif à base de PVC.

**8.** Adhésif à base de PVC selon l'une quelconque des revendications 4 à 7, dans lequel le solvant comprend un second composant qui est entre 15 % en poids et 55 % en poids du poids total du solvant.

**9.** Adhésif à base de PVC selon l'une quelconque des revendications 1 à 8, comprenant en outre un copolymère de chlorure de vinyle et d'acétate de vinyle (PVC/Ac) présent sous forme dissoute dans le solvant.

**10.** Utilisation d'un adhésif à base de PVC selon l'une quelconque des revendications 1 à 9, dans l'assemblage de tuyaux fabriqués en PVC selon la norme NEN-EN 14814:2007, dans laquelle l'assemblage à l'aide de l'adhésif obtenu répond aux exigences définies dans ladite norme en termes de résistance au cisaillement et de résistance à la pression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010006220 A